# EUROPÄISCHE PATENTANMELDUNG

(11) **EP 1 060 651 A1**
(43) Veröffentlichungstag der Anmeldung: **20.12.2000**
(21) Anmeldenummer: 00112797.6
(22) Anmeldetag: 16.06.2000
(51) Int. Cl.: A01D 78/10

(54) **Heuwerbungsmaschine, insbesondere Kreiselschwader**

(30) Priorität: 18.06.1999 DE 19928219
(71) Anmelder: NIEMEYER Landmaschinen GmbH, 48477 Hörstel-Riesenbeck (DE)
(72) Erfinder: Altepost, Helmut, 48477 Hörstel (DE); Ungruh, Josef, 45429 Rheine (DE)

(57) **Zusammenfassung**

Heuwerbungsmaschine, insbesondere anhängbarer Kreiselschwader (1) für Traktoren (2) mit mindestens zwei von der Zapfwelle (11) eines Traktors (2) um aufrechte Kreiselachsen (7,7') umlaufend angetriebene, über höheneinstellbare Laufräder (4) gegenüber dem Boden abgestützten, mit Rechzinken (13) bestückten Schwadkreiseln (3,3'), von denen der erste (3) an einem durch eine Deichsel (8) in seiner Lauf- und Arbeitsrichtung (F) geführten Tragholm (6) abgestützt ist, an dem im Abstand vor der Kreiselachse (7) des ersten Schwadkreisels (3) ein Verbindungsträger (5) mit seinem vorderen Ende mittels eines Schwenkgelenks (14) um eine Hochachse (14 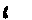 ) schwenkbar angreift und mit dessen rückwärtigen Ende der zweite, um eine Hochachse (19 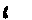 ) verschwenk- und feststellbare Schwadkreisel (3 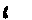 ) verbunden ist, wobei eine im Tragholm (6) angeordnete erste Antriebswelle (22) für den Antrieb des ersten Schwadkreisels (3) und für den Antrieb des zweiten Schwadkreisels (3 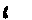 ) eine im Verbindungsträger (5) angeordnete zweite Antriebswelle (26) vorgesehen ist, die über ein Zwischengetriebe an die Hauptantriebswelle (22) im Bereich des Tragholms (6) angeschlossen ist, wobei das Zwischengetriebe und Schwenkgelenk (14) für den Anschluß des Verbindungsträgers (5) am Tragholm (6) eine Baueinheit in Form eines Schwenk- und Verteilergetriebe (15) bilden, bei dem die Getriebeachse mit der Hochachse (14 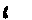 ) des Schwenkgelenks (14) zusammenfällt.

## Beschreibung

Die Erfindung betrifft eine Heuwerbungsmaschine in einer Ausbildung gemäß dem Oberbegriff nach Anspruch 1.

Bei einer bekannten Heuwerbungsmaschine dieser Art (DE 40 21 812 A1; DE 298 06 999 U1) ist das Zwischengetriebe im Abstand vor dem Schwenkgelenk, mit dem der Verbindungsträger am Tragholm angreift, dem Tragholm zugeordnet, so daß bei Schwenkbewegungen des Verbindungsträgers relativ zum Tragholm der sich zwischen dem Zwischengetriebe und dem Verbindungsträger erstreckende Teil der Antriebsverbindung für den zweiten Schwadkreisel einer Längenveränderung ausgesetzt ist, der beispielsweise durch teleskopische Ausführung der Antriebswelle in diesem Bereich Rechnung zu tragen ist.

Die Erfindung befaßt sich mit dem Problem, eine kostengünstige Heuwerbungsmaschine der genannte Art mit einfacher Gelenkkinematik und einen einfachen, robusten Antrieb für die Schwadkreisel bei gleichzeitiger Optimierung der Betriebseigenschaften zu schaffen.

Die Erfindung löst das Problem mit einer Heuwerbungsmaschine mit den Merkmalen des Anspruchs 1. Hinsichtlich wesentlicher weiterer Ausgestaltungen der Erfindung wird auf die Ansprüche 2 bis 12 verwiesen.

Durch das Zusammenlegen des Schwenkgelenks für den Anschluß des Verbindungsträgers und des Zwischengetriebes in einer als Schwenk- und Verteilergetriebe ausgebildeten Baueinheit ist sichergestellt, daß die Antriebsstränge zu den Schwadkreiseln in allen Betriebsstellungen der Maschine frei sind von Längenänderungen, so daß eine vollständige Aufnahme der Antriebswellen in Tragholm und Verbindungsträger möglich ist. Die Antriebsstränge sind in allen Betriebsstellungen zugentlastet, wobei das Zusammenfallen von Getriebe- und Gelenkachse mit dem Zugpunkt der Maschine besonders günstige Kräfteverhältnisse erbringt.

Weitere Einzelheiten und Wirkungen ergeben sich aus der nachfolgenden Beschreibung und der Zeichnung, in der zwei Ausführungsbeispiele des Gegenstands der Erfindung näher veranschaulicht sind.

### Bezugszeichenliste

1 - Kreiselschwader
2 - Traktor
3,3',3 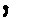 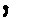 - Schwadkreisel
4 - Laufrad
5 - Verbindungsträger
6 - Vorderer Tragholm
7,7',7 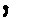 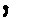 - Kreiselachse
8 - Zugdeichsel
9 - Schwenkgelenk
9' - Gelenkachse
10 - Gelenkwelle
11 - Zapfwelle
12 - Zinkenarm
13 - Rechzinken
14 - Schwenkgelenk
14 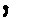 - Schwenkachse
15 - Schwenk- u. Verteilergetriebe
16 - Stellantrieb
17 - Fahrbahnebene
18 - Schwenkgelenk
18' - Schwenkachse
19 - Schwenkgelenk
19' - Schwenkachse
20 - Drehrichtung
21 - Großschwad
22 - Hauptantriebswelle
23 - unteres Kegelradgetriebe
24 - oberes Kegelradgetriebe
25,25' - Schwadkreiselgetriebe
26- Gelenkwelle
27 - Antriebswelle
28 - Antriebsritzel
29 - Weitwinkel-Kreuzgelenk
30 - Kreuzgelenk
31 - Mittelwelle
32 - Drehgelenk
32' - Drehgelenkachse
33 - Zugpunkt
34 - Tellerrad
35 - Hauptzuglinie
36,36' - Lagergehäuse
37,37' - Kleinschwad
38 - Anhängepunkt
39 - Schrägzuglinie
40 - Stellantrieb
41 - Anschlagpunkt
42 - Anschlagpunkt
43 - Fahrwerk
44 - Stellantrieb
45 - Anschlag
46 - Anschlag
47 - Schwinge
48 - Gelenkpunkt
49 - Anschlagpunkt
50 - Anschlagpunkt
51 - Fahrwerkstützkonstruktion
52 - Maschinengestell
101 - Kreiselschwader
105 - Verbindungsträger
106 - Tragholm
114 - Schwenkgelenk
114 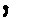 - Schwenkachse
115 - Schwenk- u. Verteilergetriebe
118 - Schwenkgelenk
118 - Schwenkachse
123 - unteres Kegelradgetriebe
124 - oberes Kegelradgetriebe
126 - Gelenkwelle
132 - Drehgelenk
α,α' - Anstellwinkel
β - Beugewinkel
γ - Beugungswinkel
F - Fahrt- u. Arbeitsrichtung
F_{Z},-F_{Z} - Zugkraft
F_{Z1},F_{Z2} - Zugkraft
-F_{Z1}, -F_{Z2},.- Verfahrwiderstand
F_{ZS},-F_{ZS} - Schrägzugkraft
F_{B}*,* -F_{B} - Bodenführungskraft
H - Höhenlage
Md_{E} - Eingangsdrehmoment
Md_{K1} - Kreiselantriebsdrehmoment
Md_{K2} - Kreiselantriebsdrehmoment
Md_{K3} - Kreisetantriebsdrehmoment
Md₁ - Teilantriebsdrehmoment
Md₂ - Teilantriebsdrehmoment
R_{RZ} - Rechzinkenumlaufradius
R_{Z}, R 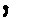 _{Z} - Zugpunktradius

Es zeigen:
- Fig. 1 -: Eine Seitenansicht des Kreiselschwaders 1 in Transportstellung
- Fig. 1a -: Schwenkgelenk 9 gemäß Fig.1 in vergrößerter Darstellung
- Fig. 1b -: Fahrwerk 43 gemäß Fig.1 in vergrößerter Darstellung
- Fig. 2 -: Eine Draufsicht auf den Kreiselschwader 1 gemäß Fig. 1
- Fig. 3: Kreiselschwader 1 verschwenkt gegenüber der Transportstellung in eine Arbeitsstellung
- Fig. 3a: Schwadablage des Kreiselschwaders 1 analog der in Fig.3 dargestellten Arbeitsstellung
- Fig. 3b: Eine andere Arbeitsstellung des Kreiselschwaders 1 als die in Fig. 3a dargestellte
- Fig. 3c -: Verlauf der Zuglinien innerhalb des Kreiselschwaders 1
- Fig. 4 -: Schwenkgelenk 14 in der Arbeitsstellung gemäß Fig.3 in vergrößerter Darstellung
- Fig. 5 -: Ansicht X gemäß Fig. 4 in einer Seitenansicht
- Fig. 6 -: Eine vereinfachte Darstellung eines Längsschnitts durch das Maschinengestell 52 gemäß Fig. 1
- Fig. 7 -: Eine vergrößerte Darstellung des Schwadkreisels 3 gemäß Fig. 6.
- Fig. 8 -: Eine vergrößerte Darstellung des Schwadkreisels 3' gemäß Fig. 6
- Fig. 9 -: Ein Kreiselschwader 101 angehängt an einen Traktor 2 in einer Seitenansicht
- Fig. 10 -: Ein Kreiselschwader 101 angehängt an einen Traktor 2 in einer Draufsicht
- Fig. 11 -: Kreiselschwader 101 umgeschwenkt in eine Arbeitsstellung
- Fig. 12 -: Ein Teil-Längsschnitt durch das Maschinengestell 52 des Kreiselschwaders 101 in einer vereinfachten Darstellung
- Fig. 13 -: Eine vergrößerte Darstellung des Schwadkreisels 3'' gemäß Fig. 12

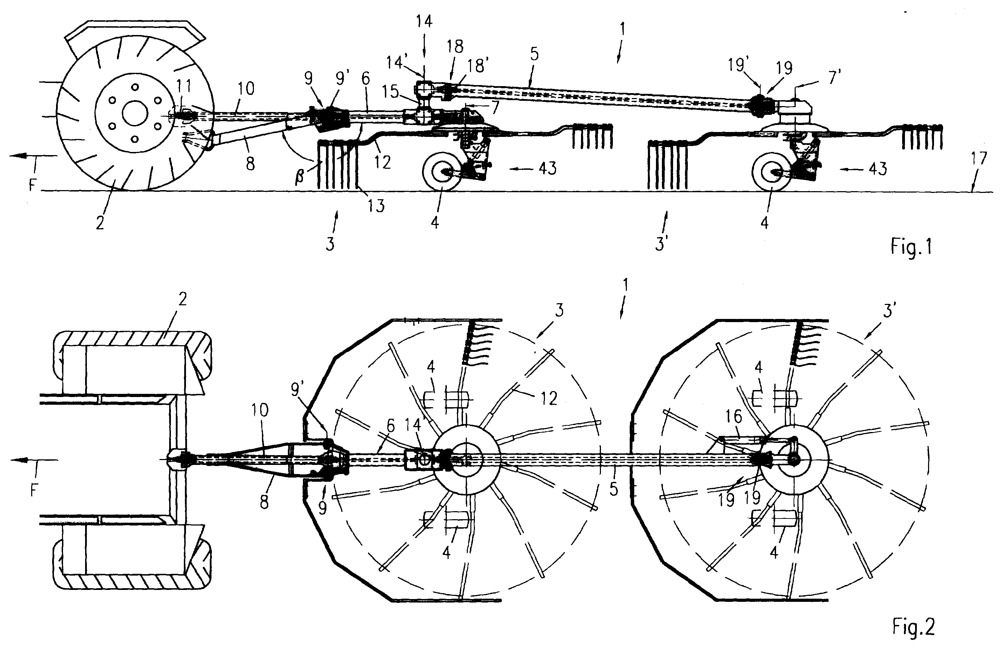

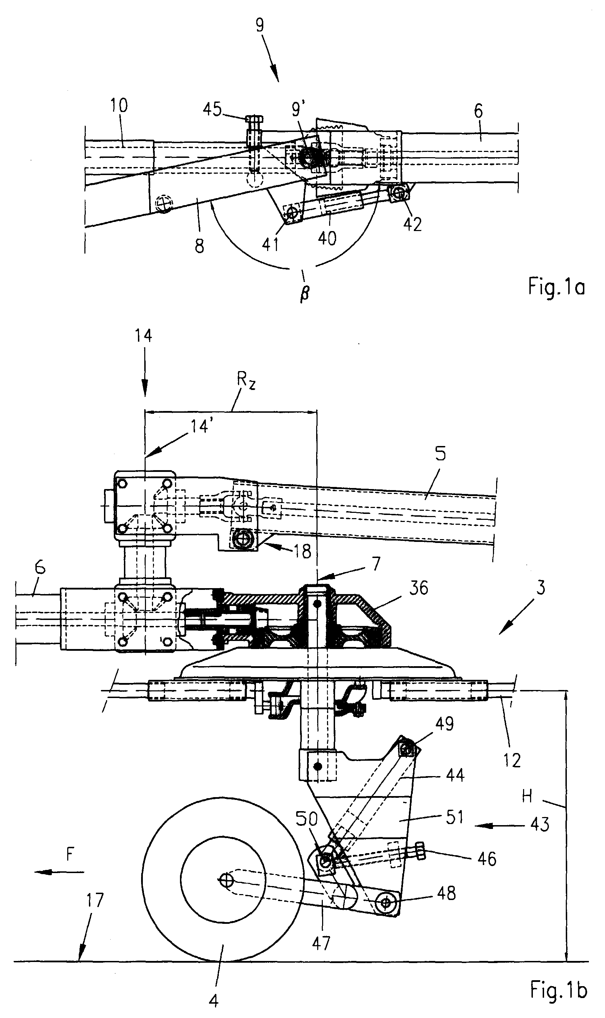

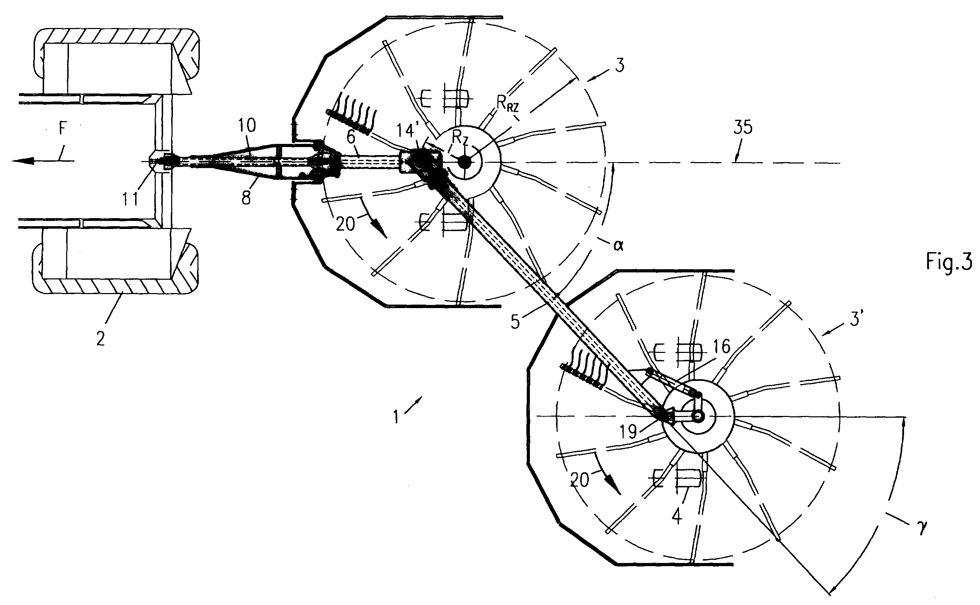

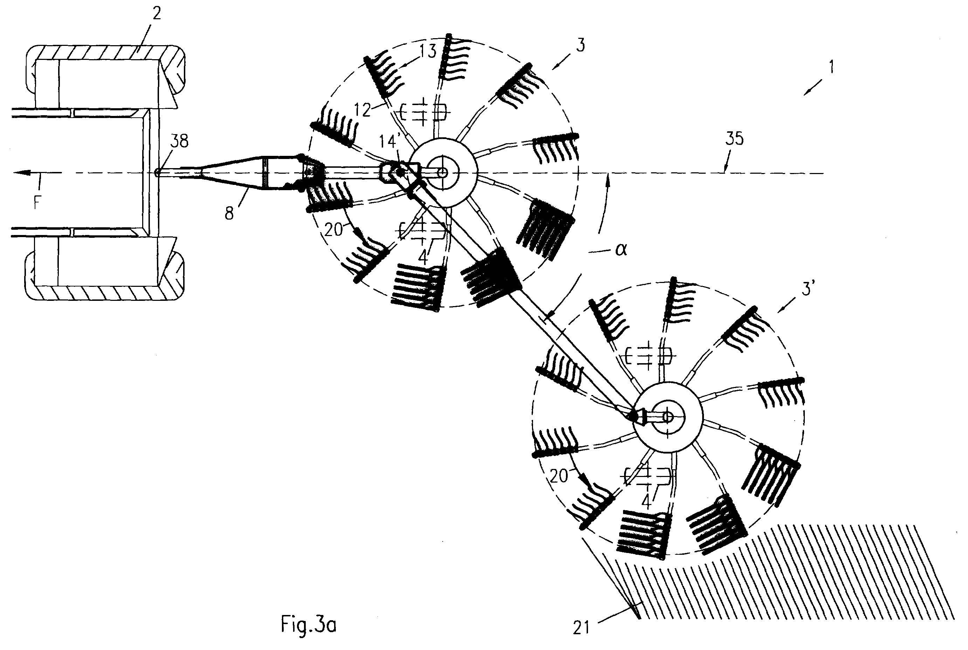

**Fig. 1** und **Fig. 2** zeigt einen Kreiselschwader 1 gemäß der Erfindung in Transportstellung in Fahrtrichtung F. Fig. 1 zeigt eine Seitenansicht des Kreiselschwaders 1 und Fig. 2 eine Draufsicht auf den Kreiselschwader 1 mit zwei Schwadkreiseln 3,3'.

Der Kreiselschwader 1 ist mittels einer Zugdeichsel 8 an einem Traktor 2 angehängt, wobei der Kreiselschwader 1 antriebsseitig mittels einer Gelenkwelle 10 mit der Zapfwelle 11 des Traktors 2 gekuppelt ist. Die Schwadkreisel 3,3' sind um ihre jeweilige Kreiselachse 7,7' dreh- und antreibbar gelagert, wobei sich die Schwadkreisel 3,3' mit den Laufrädern 4 des Fahrwerks 43 gegenüber der Fahrbahnebene 17 abstützen. Die Schwadkreisel 3,3' sind durch den Verbindungsträger 5 miteinander verbunden, Der vordere Schwadkreisel 3 ist mit dem vorderen Tragholm 6 verbunden, wobei der vordere Tragholm 6 wiederum mit der Zugdeichsel 8 im Schwenkgelenk 9 mit der Schwenkachse 9 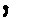 als Horizontalachse quer zur Fahrtrichtung F verlaufend verbunden ist. Zwischen dem vorderen Tragholm 6 und dem ersten Schwadkreisel 3 befindet sich ein Schwenk- und Verteilergetriebe 15, ausgebildet als Doppelkegelradgetriebe mit der Schwenkachse 14 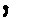 als Hochachse.

Jeder Schwadkreisel 3,3' ist mit mehreren überwiegend radial nach außen gerichteten Zinkenarmen 12 bestückt, an dessen Enden die Rechzinken 13 befestigt sind, wobei die Ausrichtung der Zinken während ihrer Umlaufbewegung um die Kreiselachse 7,7' in bekannter Weise durch eine Kurvenbahn gesteuert wird.

Der in Fahrtrichtung F vordere Anschluß des Verbindungsträgers 5 an das Schwenk- und Verteilergetriebe 15 erfolgt mittels eines Schwenkgelenks 18, dessen Schwenkachse 18' parallel zur Fahrbahnebene 17 in der Geradeausfahrt der Transportstellung quer zur Fahrt- u. Arbeitsrichtung F verläuft.

Der hintere Anschluß des Verbindungsträgers 5 an den Schwadkreisel 3' erfolgt durch ein feststellbares Schwenkgelenk 19 mit der Schwenkachse 19' als Hochachse, welche überwiegend lotrecht zur Fahrbahnebene F ausgerichtet ist. Der hintere Schwadkreisel 3 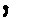 ist durch ein horizontales Drehgelenk 32 mit dem Verbindungsholm verbunden, so das der hintere Schwadkreisel 3 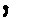 in und quer zur Fahrt- und Arbeitsrichtung F unabhängig von dem ersten Schwadkreisel 3 Bodenanpassungsbewegungen ausführen kann.

Der hintere Schwadkreisel 3' ist um die Schwenkachse 19' des Schwenkgelenks 19 mittels eines Stellantriebs 16, beispielsweise ausgebildet als Druckmittelzylinder, verschwenk- und feststellbar.

**Fig. 1a** zeigt das Schwenkgelenk 9 gemäß Fig.1 in vergrößerter Darstellung. Das Gelenk ist durch einen Stellantrieb 40, beispielsweise ausgebildet als Druckmittelzylinder, überbrückbar, wobei der Stellantrieb 40 in den Anschlagpunkten 41,42 einerseits mit der Zugdeichsel 8 und andererseits mit dem vorderen Tragholm 6 gelenkig verbunden ist. Durch Betätigung des Stellantriebs 40 kann der Beugewinkel β verändert, d.h. vergrößert oder verkleinert werden, wodurch das Schwenkgelenk 9 bzw. die Gelenkachse 9 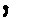 gegenüber der Fahrbahnebene 17 angehoben bzw. abgesenkt werden kann. Mit dem einstellbaren Anschlag 45 kann der Beugewinkel β begrenzt werden. Im Betriebszustand befindet sich der Hydraulikzylinder des Stellantriebs 40 in Schwimmstellung. Der maximale Beugewinkel β ist begrenzbar durch den Anschlag 45. In der Transportstellung befindet sich der Kolben des Hydraulikzylinders des Stellantriebs 40 im eingespannten Zustand.

**Fig. 1b** zeigt das Fahrwerk 43 gemäß Fig.1 in vergrößerter Darstellung am Beispiel des Schwadkreisels 3. Die Kreiselachse 7 ist parallel im Abstand mit dem Zugpunktradius R_{Z} zur Schwenkachse 14 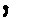 angeordnet. Fahrwerk 43, Lagergehäuse 36 und vorderer Tragholm 6 bilden eine starr gekoppelte Einheit mit jeweils zwei Laufrädern 4. Jeweils zwei Laufräder 4 eines Fahrwerks 43 sind an einer Schwinge 47 schwenkbar um den Gelenkpunkt 48 der Fahrwerkstützkonstruktion 51 gelagert. Die Veränderung der Höhenlage H (Höheneinstellung) des Schwadkreisels 3 gegenüber der Fahrbahnebene 17 erfolgt über einen Stellantrieb 44, beispielsweise ausgebildet als Druckmittelzylinder, wobei der Stellantrieb 44 einerseits an der Fahrwerkstützkonstruktion 51 im Anschlagpunkt 49 und andererseits an der Schwinge 47 im Anschlagpunkt 50 gelenkig angeschlagen ist.

Durch Betätigung der Stellantriebe 44 kann die Höhenlage H der Schwadkreisel 3,3 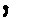 verändert und der Kreiselschwader 1 somit von Transport- in Arbeitsstellung abgesenkt bzw. von Arbeits- in Transportstellung angehoben werden. Durch einstellbare Anschläge 46 kann die Absenktiefe der Schwadkreisel 3,3' einstellbar begrenzt werden.

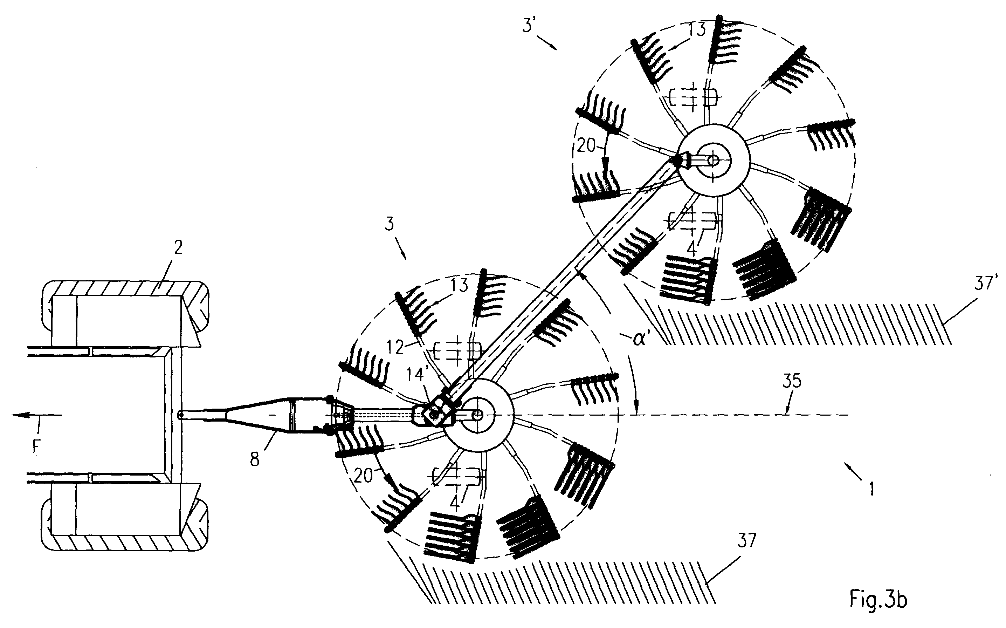

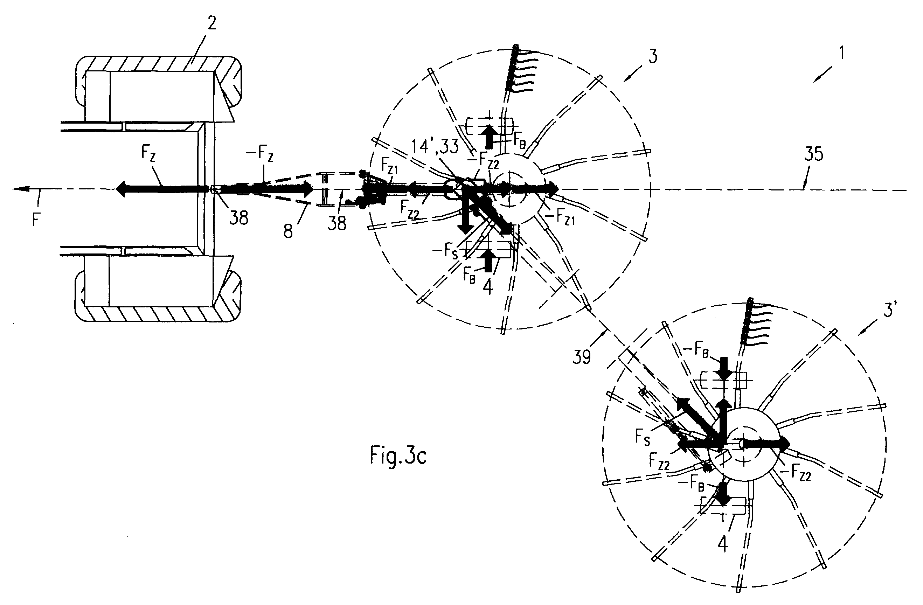

**Fig. 3** zeigt den Kreiselschwader 1 verschwenkt gegenüber der Transportstellung in eine Arbeitsstellung. Die Überführung des Kreiselschwaders 1 von seiner Transportstellung in eine Arbeitsstellung erfolgt durch Betätigung des Stellantriebs 16, wodurch der hintere Schwadkreisel 3 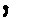 im Schwenkgelenk 19 um die Schwenkachse 19 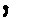 (Hochachse) um einen Winkel γ verschwenkt wird. Durch anschließende oder gleichzeitige Vorwärtsfahrt verschwenkt der Verbindungsträger 5 um die Schwenkachse 14 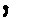 gegenüber der Hauptzuglinie 35 um den Winkel α, wodurch die Laufräder 4 des Schwadkreisels 3 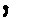 die Fahrtrichtung F des Traktors 2 annehmen. Beide Schwadkreisel 3,3' drehen in gleicher Drehrichtung 20, wobei die äußeren Rechzinken auf dem Rechzinkenumlaufradius R_{RZ}.laufen.

**Fig. 3a** zeigt die Schwadablage des Kreiselschwaders 1 analog der in Fig.3 dargestellten Arbeitsstellung. Durch die dargestellte geometrische Zuordnung der Schwadkreisel 3,3 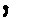 und durch die Drehrichtungen 20 der Schwadkreisel 3,3' wird von dem Kreiselschwader 1 ein Großschwad 21 als Seitenschwad abgelegt.

**Fig. 3b** zeigt eine andere Arbeitsstellung des Kreiselschwaders 1, die eine andere Schwadablage bewirkt als die in Fig.3a dargestellte. In dieser Arbeitsstellung nimmt der Verbindungsträger 5 gegenüber der Hauptzuglinie 35 den Winkel α 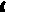 ein. Durch diese geometrische Zuordnung der Schwadkreisel 3,3 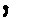 zueinander in Verbindung mit den Drehrichtungen 20 der Schwadkreisel 3,3 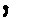 werden von dem Kreiselschwader 1 zwei Kleinschwaden 37,37' als Einzelschwaden parallel in Abstand zueinander abgelegt.

In **Fig. 3c** ist der Verlauf der Zuglinien innerhalb des Kreiselschwaders 1 dargestellt. Die Schwadkreisel 3,3' verursachen im Betriebszustand die Verfahrwiderstände -F_{Z1}, -F_{Z2},. Diesen entgegengesetzt gerichtet sind die Teilzugkräfte F_{Z1} und F_{Z2}, deren Summenvektor als Zugkraft F_{Z} am Anhängepunkt 38 der Zugdeichsel 8 am Traktor 2 in der Hauptzuglinie 35 in Fahrt- und Arbeitsrichtung F wirksam ist.

Bedingt durch die Schräganbindung des Schwadkreisels 3 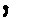 im Schwenkgelenk 14 mit der Schwenkbeweglichkeit um die Gelenkachse 14 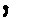 gegenüber der Hauptzuglinie 35 stellt sich in der Schrägzuglinie 39 am Schwadkreisels 3 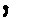 die Schrägzugkraft F_{S} und lotrecht zur Gelenkachse 14' die Reaktionskraft als Schrägzugkraft -F_{S} ein.

Die Projektion der Hauptzuglinie 35 und der Schrägzuglinie 39 auf die Zeichenebene der Darstellung Fig.3c ergibt in der Projektionsebene einen Schnittpunkt, wobei dieser auf der Gelenkachse 14' liegt. Dieser Schnittpunkt kann als Zugpunkt 33 für den Schwadkreisel 3' aufgefaßt werden.

Die stabile Ausrichtung der Schwadkreisel 3,3' in Bezug auf die Fahrtrichtung F verlangt eine seitliche Führungssteife zur Beibehaltung der Ausrichtung. Diese ist dann gegeben, wenn die Bodenführungskräfte F_{B}, -F_{B}, welche auf die Laufräder 4 einwirken, die Reibungskräfte zwischen den einzelnen Laufrädern 4 und der Fahrbahnebene 17 nicht überschreiten.

In Hanglagen können zusätzliche Hangabtriebskräfte auftreten, so daß die Reibungskräfte zwischen den Laufrädern 4 und dem Untergrund als Fahrbahnebene 17 die seitliche Führungssteife des Kreiselschwaders 1 nicht gewährleisten, welches ein Abdriften der Schwadkreisel 3,3' quer zur Fahrtrichtung zur Folge haben könnte. Diese Abdriftbewegung kann beispielsweise durch Gegenlenken der Laufräder 4 der Schwadkreisel 3' durch eine mit der momentanen Fahrtrichtung F gekoppelten Fahrwerkssteuerung in Verbindung mit der Erfindung unterdrückt werden.

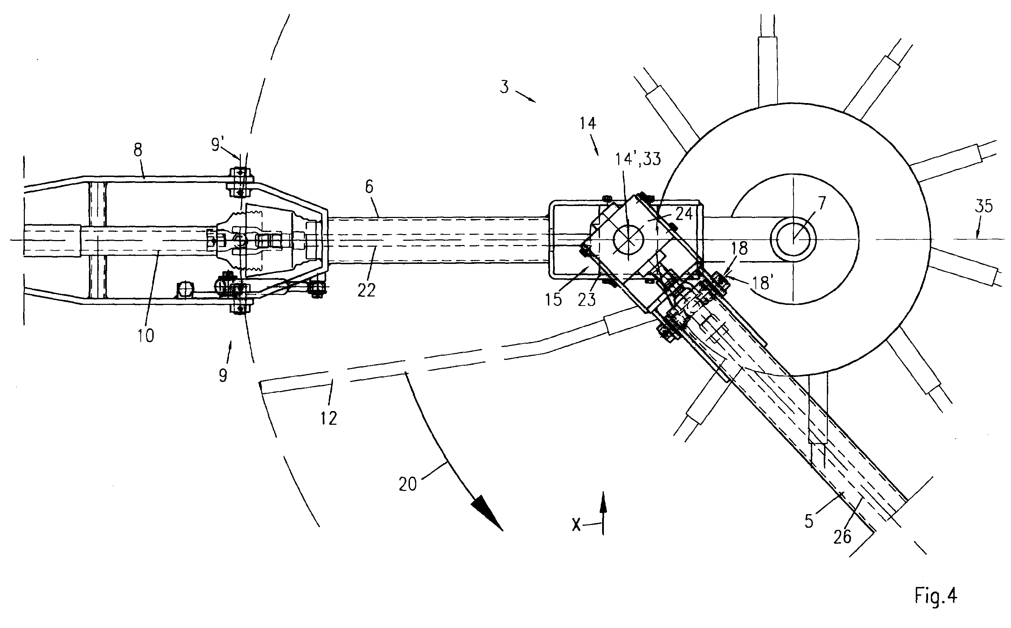

**Fig. 4** zeigt das Schwenkgelenk 14 in der Arbeitsstellung gemäß Fig.3 in vergrößerter Darstellung. Die Zapfwelle 10, als Teil des Antriebsstrangs, wird fortgesetzt durch die Hauptantriebswelle 22, welche sich im Innenraum des vorderen Tragholms 6, welcher als Hohlprofil ausgebildet ist, in Richtung der Hauptzuglinie 35 erstreckt, und welche gleichermaßen die Eingangswelle des unteren Kegelradgetriebes 23 des Schwenk- und Verteilergetriebes 15 darstellt.

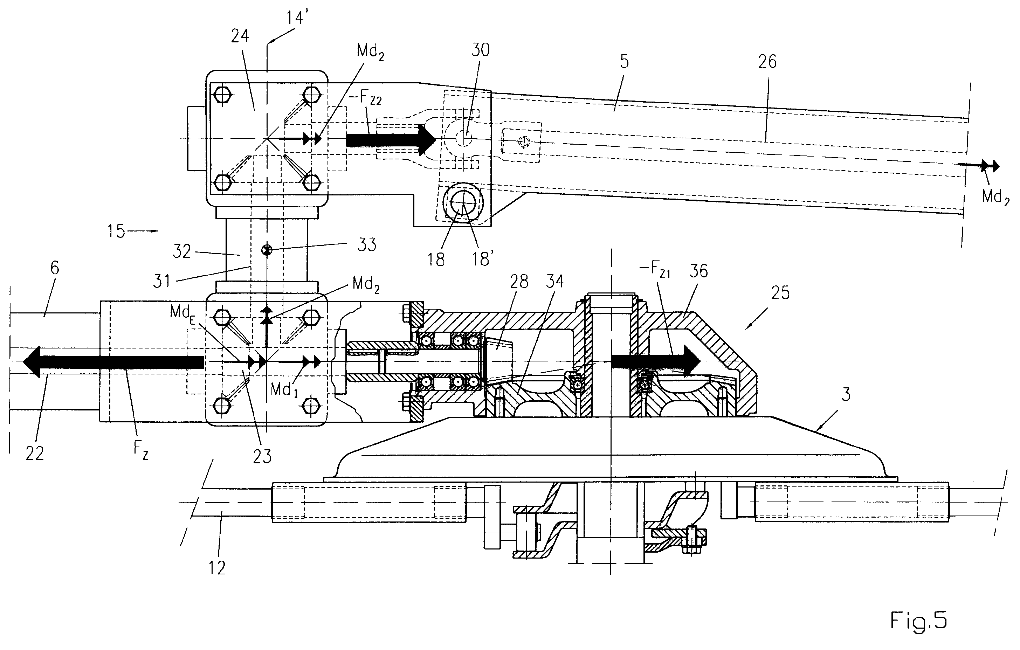

**Fig. 5** zeigt die Ansicht X gemäß Fig. 4 in einer Seitenansicht, wobei der Verbindungsträger 5 in die Zeichenebene verschwenkt dargestellt ist. Neben der Funktion als Schwenkgelenk 14, fungiert das Schwenk- und Verteilergetriebe 15 gleichzeitig als Bindeglied innerhalb des Maschinengestells zur Übertragung der Teilzugkräfte -F_{Z1}, -F_{Z2}, welche als Summenvektor die Zugkraft -F_{Z} ergeben, wobei die Zugkraft -F_{Z} über die Zugdeichsel 8 im Anhängepunkt 38 des Traktors 2 abgestützt wird.

Desweiteren übernimmt das Schwenk- und Verteilergetriebe 15 die Funktion der zur Aufspaltung des Eingangsdrehmoments Md_{E} in zwei Teilantriebsstränge mit den Teilantriebsdrehmomenten Md₁, Md₂ zum Antrieb der Schwadkreisel 3 bzw.3'.

Die Antriebsstrangverzweigung erfolgt im unteren Kegelradgetriebe 23, wobei das Drehmoment Md1 auf das Antriebsritzel 28 zum Antrieb des Tellerrades 34, welche im Lagergehäuse 36 des Schwadkreiselgetriebes 25 gelagert sind, das Antriebsdrehmoment Md₂ auf die Mittelwelle 31 im Drehgelenk 32 und von dort durch das obere Kegelradgetriebe 24 über das Kreuzgelenk 30 auf die Gelenkwelle 26, welche sich im Innenraum des Verbindungsträgers 5 erstreckt, übertragen wird.

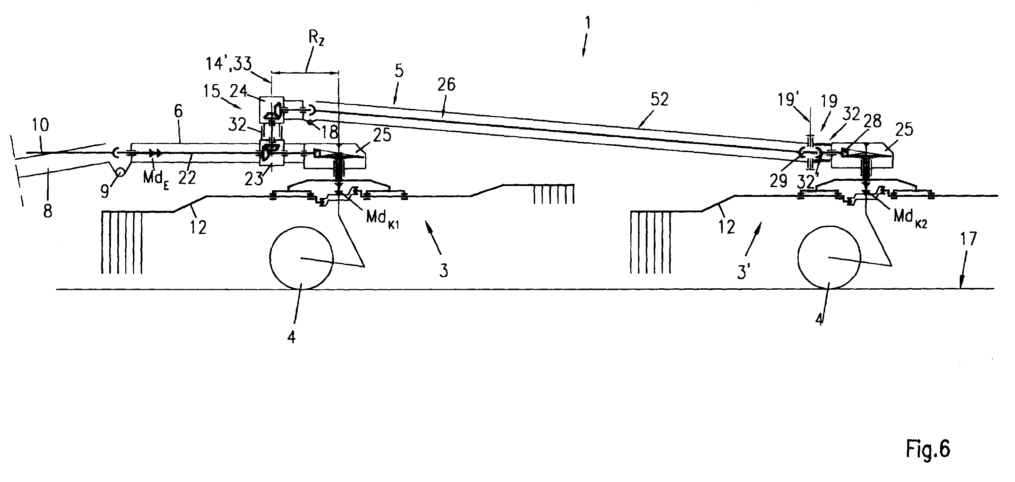

**Fig. 6** zeigt in einer vereinfachten Darstellung einen Längsschnitt durch das Maschinengestell 52 mit dem kompletten Antriebsstrang zwischen der Zapfwelle 11 des Traktors 2 und den Schwadkreiseln 3,3' zur Erzeugung der Kreiselantriebsdrehmomente Md_{K1} und Md_{K2}.. Der Verbindungsträger 5 ist im Schwenkgelenk 18 mit dem oberen Kegelradgetriebe 24 und im Schwenkgelenk 19 mit dem hinteren Schwadkreisel 3' verbunden, wobei der hintere Schwadkreisel 3' mit dem Schwenkgelenk 19 durch ein Drehgelenk 32 verbunden ist. Das Schwenkgelenk 18 ermöglicht dem hinteren Schwadkreisel 3' eine Schwenkbewegung um die Schwenkachse 18', welches dem hinteren Schwadkreisel 3' einen in der Praxis hinreichenden Freiheitsgrad hinsichtlich der vertikalen Bewegbarkeit zur Bodenanpassung unabhängig vom ersten Schwadkreisel 3 ermöglicht. Das Drehgelenk 32 ermöglicht dem hinteren Schwadkreisel 3' eine Drehbewegung um die Drehgelenkachse 32' des Drehgelenks 32, welches dem hinteren Schwadkreisel 3' einen in der Praxis hinreichenden Freiheitsgrad hinsichtlich der Rollbewegungen zur Bodenanpassung unabhängig vom ersten Schwadkreisel 3 ermöglicht.

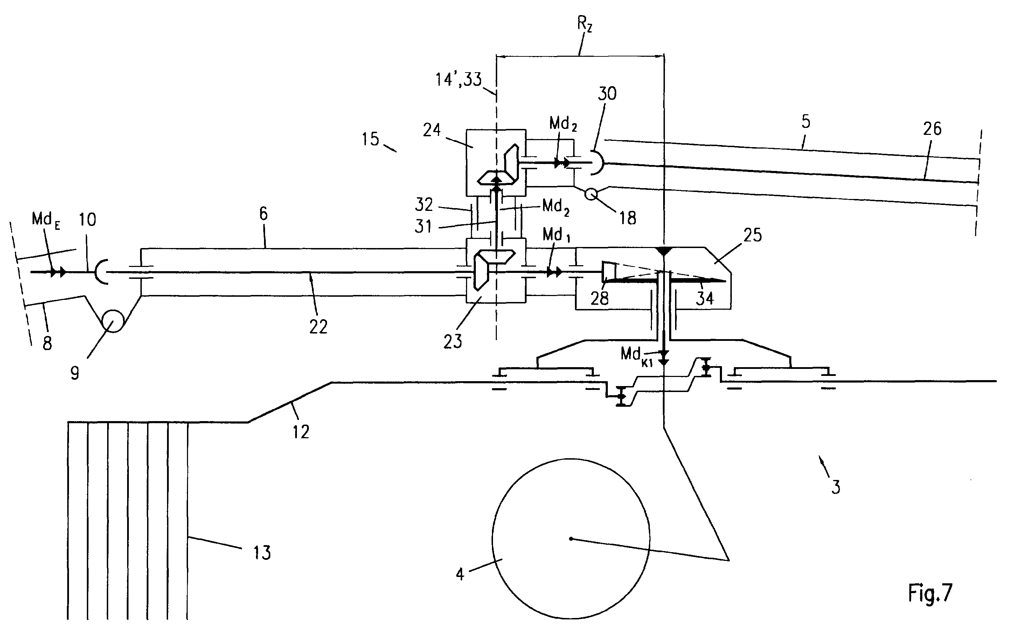

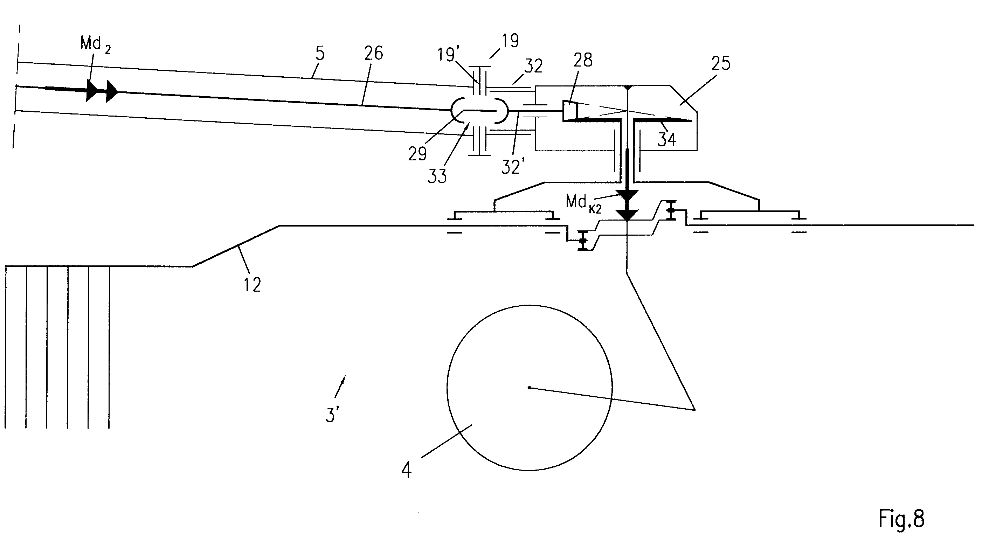

**Fig. 7** zeigt eine vergrößerte Darstellung des Schwadkreisels 3 und **Fig. 8** zeigt eine vergrößerte Darstellung des Schwadkreisels 3' gemäß Fig. 6.

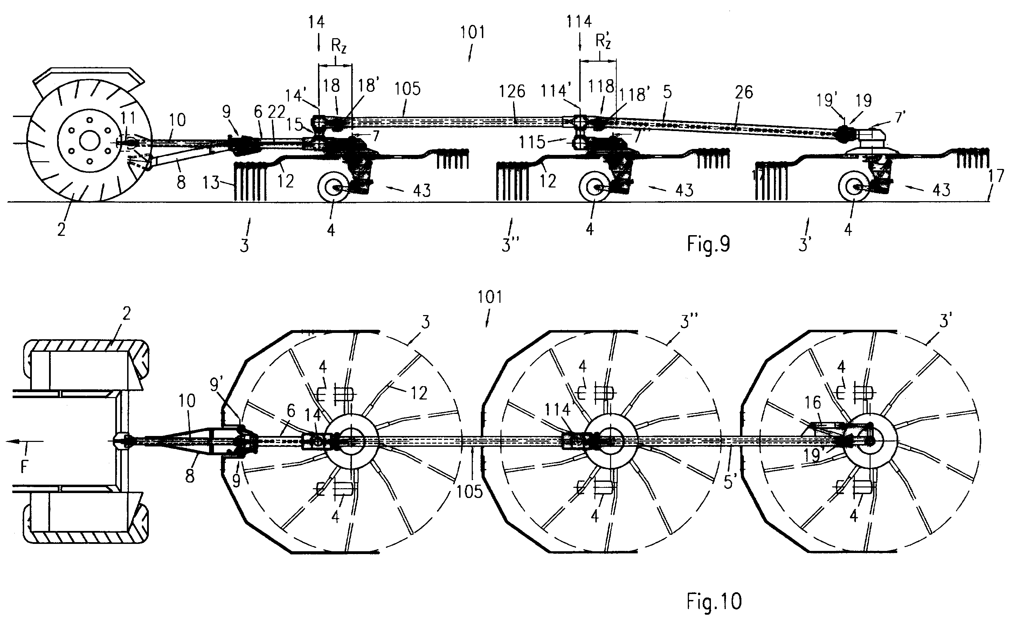

**Fig. 9** und **Fig. 10** zeigen einen Kreiselschwader 101 angehängt an einen Traktor 2 in einer Transportstellung, wobei Fig.9 eine Seitenansicht und Fig.10 eine Draufsicht darstellt. Es handelt sich hierbei um die Erweiterung des Kreiselschwaders 1 gemäß Fig.1 bzw. Fig.2, indem ein dritter Schwadkreisel 3 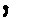 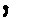 mittels eines zusätzlichen Verbindungsträgers 105 und einem Schwenk- und Verteilergetriebes 115 etwa mittig zwischen den Schwadkreiseln 3 und 3 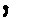 angeordnet d.h. eingefügt ist.

Antrieb und Steuerung der Schwadkreisel 3,3 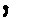 ,3 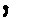 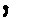 erfolgen prinzipiell nach den Beschreibungen, wie unter der Fig. 1 bis Fig. 8 dargelegt.

Der Verbindungsträger 105 ist im Schwenkgelenk 18 mit dem Schwenk- und Verteilergetriebe 15 verbunden, und der Verbindungsträger 5 ist im Schwenkgelenk 118 mit dem Verteilergetriebe 115 verbunden. Der Schwadkreisel 3'' ist durch das Schwenk- und Verteilergetriebe 115 in den Antriebsstrang eingebunden. Im Abstand R_{Z} 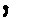 vor der Kreiselachse 7'' des Schwadkreisels 3 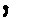 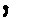 befindet sich die Schwenkachse 114 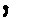 des Schwenkgetriebes 115.

Der Drehmomentenfluß und damit der Antrieb des Schwadkreisels 3 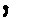 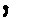 erfolgt innerhalb des Schwenk- und Verteilergetriebes 115 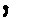 vom oberen Kegelradgetriebe in das untere Kegelradgetriebe und von dort zum Schwadkreisel 3 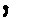 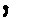 . Dieses Antriebskonzept für den mittleren Schwadkreisel 3 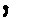 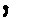 beinhaltet den Vorteil, daß das Schwenk- und Verteilergetriebe 115 ebenfalls das Bindeglied zur Übertragung der Zugkräfte innerhalb des Maschinengestells darstellt, wobei dem Schwenk- und Verteilergetriebe ebenfalls die Funktion der Drehmomentenaufspaltung zum Antrieb der Schwadkreisel 3 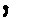 ,3 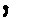 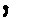 zugeordnet ist und wobei die Schwenkachse des Schwenk- und Verteilergetriebes 115 ebenfalls den Zugpunkt zur Anlenkung des Schwadkreisels 3 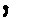 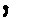 beinhaltet.

Dieses beinhaltet den Vorteil, daß der mittlere Schwadkreisel 3 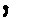 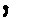 bedingt durch sein nachgeführtes Nachlaufverhalten gegenüber der Schwenkachse 114' ohne Stellantrieb oder zusätzliche Steuerungselemente zur Überbrückung des Schwenkgelenks 114 in Arbeits- oder Transportstellung betrieben werden kann, Insbesondere dieses Merkmal der Erfindung beinhaltet erhebliche Vorteile während der Transportfahrt, da das Fahrgestell 43 des Schwadkreisels 3' sich somit in jeder Kurvenfahrt den momentanen Kurvenradius anpassen kann.

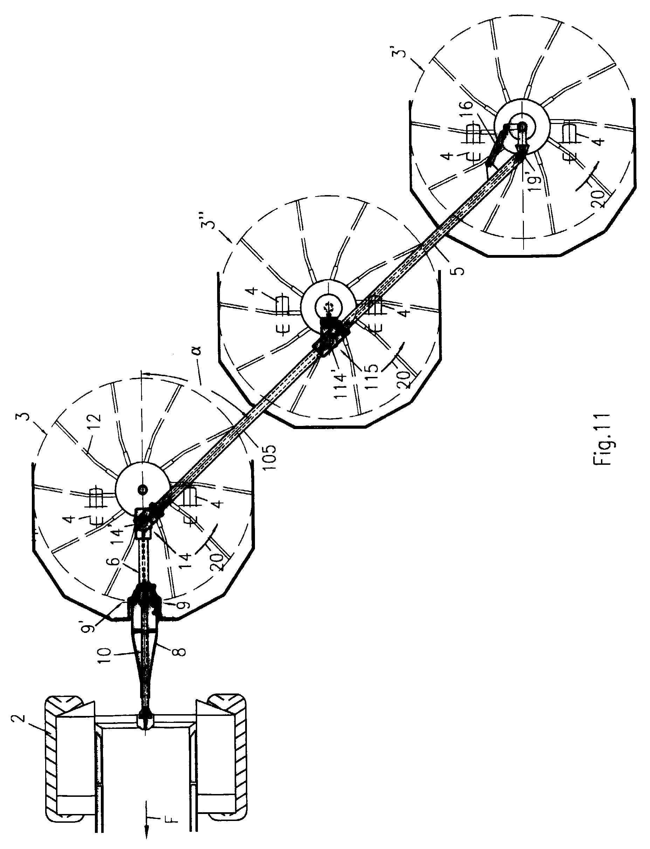

**Fig. 11** zeigt den Kreiselschwader 101 umgeschwenkt in einer Arbeitsstellung als Seitenschwader mit dem Anstellwinkel α zur Bildung eines Großschwads. Zur Überführung des Kreiselschwaders 1 von seiner Transportstellung in eine Arbeitsstellung wird der hintere Schwadkreisel 3 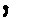 durch Betätigung des Druckmittelzylinders 16 um die Schwenkachse 14 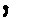 (Hochachse) um einen Winkel α verschwenkt. Während der Vorwärtsfahrt verschwenken nunmehr gleichzeitig die Verbindungsträger 5,105 um die Schwenkachse 14 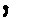 (Hochachse) solange, bis die Fahrtrichtung F der Laufräder 4 der Schwadkreisel 3 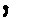 ,3 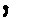 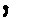 mit der Fahrtrichtung F des Traktors 2 übereinstimmen. Alle Schwadkreisel 3,3',3 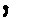 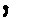 drehen in gleicher Drehrichtung 20.

In einer anderen Arbeitsstellung mit dem Anstellwinkel α 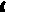 analog Fig. 3b erzeugt der Kreiselschwader 101 drei Kleinschwaden als Einzelschwaden, welche parallel zur Fahrtrichtung F in Abstand zueinander abgelegt werden.

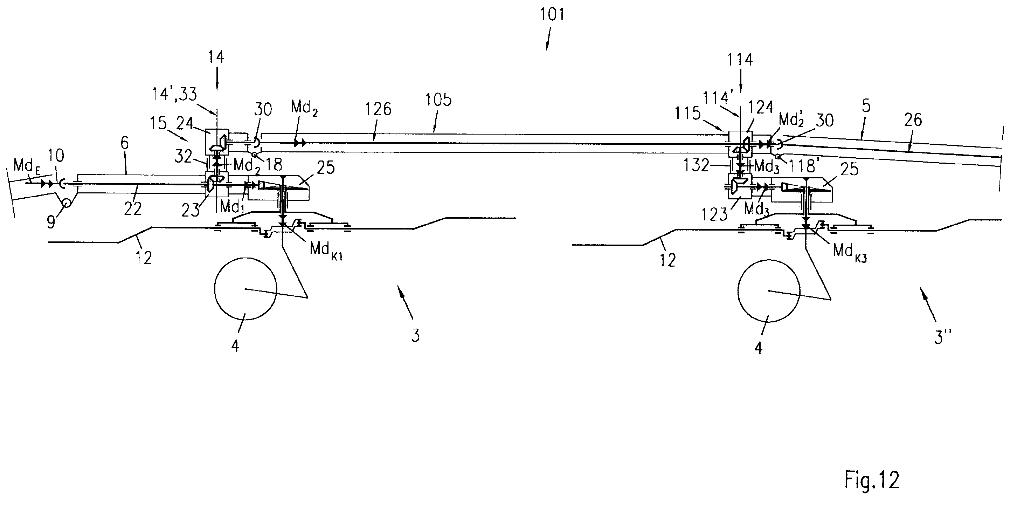

**Fig. 12** zeigt in einer vereinfachten Darstellung einen Teil-Längsschnitt durch das Maschinengestell 52 des Kreiselschwaders 101 mit einem Teil des Antriebsstrangs zwischen der Zapfwelle 11 des Traktors 2 und den Schwadkreiseln 3,3'' zur Erzeugung der Kreiselantriebsdrehmomente Md_{K1} und Md_{K3..}

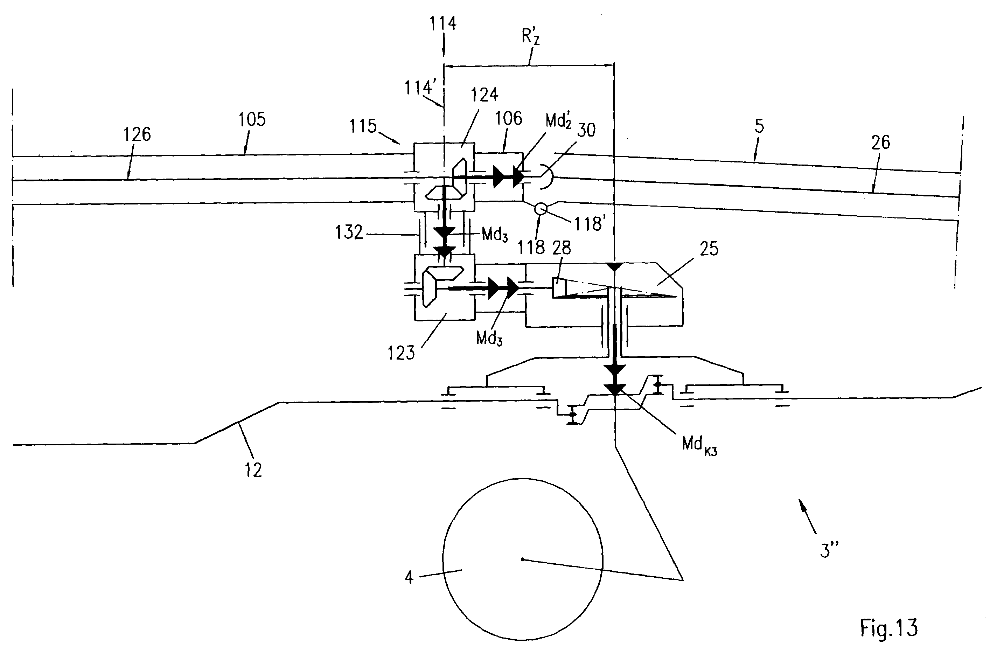

**Fig. 13** zeigt eine vergrößerte Darstellung des Schwadkreisels 3'' gemäß Fig. 12.

Die Erfindung ist auch auf Kreiselschwader mit mehr als drei Kreiseln anwendbar, wobei dann die weiteren Schwadkreisel im Sinne der Erfindung zwischen dem ersten und dem letzten Schwadkreisel frei schwenkbar um zusätzliche Schwenk- und Verteilergetriebe mit dem Maschinengestell und dem Antriebsstrang verbunden sind.

## Patentansprüche

1. Heuwerbungsmaschine, insbesondere anhängbarer Kreiselschwader (1) für Traktoren (2) mit mindestens zwei von der Zapfwelle (11) eines Traktors (2) um aufrechte Kreiselachsen (7,7') umlaufend angetriebene, über höheneinstellbare Laufräder (4) gegenüber dem Boden abgestützten, mit Rechzinken (13) bestückten Schwadkreiseln (3,3'), von denen der erste (3) an einem durch eine Deichsel (8) in seiner Lauf- und Arbeitsrichtung (F) geführten Tragholm (6) abgestützt ist, an dem im Abstand vor der Kreiselachse (7) des ersten Schwadkreisels (3) ein Verbindungsträger (5) mit seinem vorderen Ende mittels eines Schwenkgelenks (14) um eine Hochachse (14 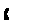 ) schwenkbar angreift und mit dessen rückwärtigen Ende der zweite, um eine Hochachse (19 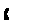 ) verschwenk- und feststellbare Schwadkreisel (3 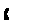 ) verbunden ist, wobei eine im Tragholm (6) angeordnete erste Antriebswelle (22) für den Antrieb des ersten Schwadkreisels (3) und für den Antrieb des zweiten Schwadkreisels (3 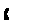 ) eine im Verbindungsträger (5) angeordnete zweite Antriebswelle (26) vorgesehen ist, die über ein Zwischengetriebe an die Hauptantriebswelle (22) im Bereich des Tragholms (6) angeschlossen ist, **dadurch gekennzeichnet,** daß das Zwischengetriebe und Schwenkgelenk (14) für den Anschluß des Verbindungsträgers (5) am Tragholm (6) eine Baueinheit in Form eines Schwenk- und Verteilergetriebe (15) bilden, bei dem die Getriebeachse mit der Hochachse (14 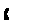 ) des Schwenkgelenks (14) zusammenfällt.

2. Heuwerbungsmaschine nach Anspruch 1, **dadurch gekennzeichnet,** daß das Schwenk- und Verteilergetriebe (15) als Doppelkegelradgetriebe ausgebildet ist.

3. Heuwerbungsmaschine nach Anspruch 2, **dadurch gekennzeichnet,** daß die Antriebsstrangverzweigung im unteren Kegelradgetriebe (23) erfolgt und das Antriebsdrehmoment über eine Mittelwelle (31) und das obere Kegelradgetriebe (24) auf die Antriebswelle (26) im Verbindungsträger (5) übertragen wird.

4. Heuwerbungsmaschine nach Anspruch 3, **dadurch gekennzeichnet,** daß die Achse der Mittelwelle (31) des Schwenk- und Verteilergetriebes (15) und die Hochachse (14 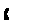 ) des Schwenkgelenkes (14) für den Anschluß des Verbindungsträgers (5) am Tragholm (6) zusammenfallen.

5. Heuwerbungsmaschine nach Anspruch 1 bis 4, **dadurch gekennzeichnet,** daß die Hochachse (14 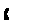 ) des Schwenk- und Verteilergetriebes (15) in einem Abstand (R_{z}) vor der Kreiselachse (7) des ersten Schwadkreisels (3) gelegen ist, der zwischen dem 0,2 bis 0,5-fachen des Arbeitskreisdurchmessers (R_{RZ}) des ersten Schwadkreisels (3) beträgt.

6. Heuwerbungsmaschine nach einem der Ansprüche 1 bis 5, **dadurch gekennzeichnet,** daß zwischen dem ersten Schwadkreisel (3) und dem zweiten Schwadkreisel (3 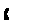 ) zumindest ein weiterer Schwadkreisel (3 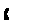 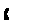 ) vorgesehen ist.

7. Heuwerbungsmaschine nach Anspruch 6, **dadurch gekennzeichnet,** daß der Verbindungsträger (105) für den zumindest einen weiteren Schwadkreisel (3 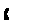 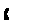 ) mit einem Schwenk- und Verteilergetriebe (115) verbunden ist, dessen Hochachse (114 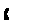 ) zur Hochachse des Schwenk- und Verteilergetriebes (15) für den ersten Schwadkreisel (3) parallel ausgerichtet ist.

8. Heuwerbungsmaschine nach Anspruch 6 oder 7, **dadurch gekennzeichnet,** daß der zumindest eine weitere Schwadkreisel (3 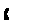 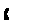 ) über einen Tragholm (106) an das Schwenk- und Verteilergetriebe (115) angeschlossen ist.

9. Heuwerbungsmaschine nach Anspruch 8, **dadurch gekennzeichnet,** daß der Tragholm (106) für einen Nachlauf um die Hochachse (114) des jeweils vorgeordneten Schwenk- und Verteilergetriebes (115) frei schwenkbar ist.

10. Heuwerbungsmaschine nach Anspruch 8, **dadurch gekennzeichnet,** daß der Abstand zwischen der Kreiselachse (7 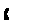 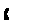 ) des zumindest einen weiteren Schwadkreisels (3 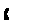 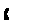 ) zur Hochachse (114 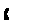 ) des vorgeordneten Schwenk- und Verteilergetriebes (115) dem Abstand der Kreiselachse (7) des ersten Schwadkreisels (3) zur Hochachse (14 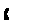 ) des diesem vorgeordneten Schwenk- und Verteilergetriebes (15) entspricht.

11. Heuwerbungsmaschine nach einem der Ansprüche 1 bis 9, **dadurch gekennzeichnet,** daß der Verbindungsträger (5;105) über ein Gelenk (18:118) mit annähernd horizontaler Querachse (18 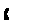 ;118 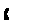 ) an das jeweils vorgeordnete Schwenk- und Verteilergetriebe (15; 115) angeschlossen ist.

12. Heuwerbungsmaschine nach einem der Ansprüche 1 bis 11, **dadurch gekennzeichnet,** daß zum Überführen des Kreiselschwaders (1) aus einer Transportstellung in eine Arbeitsstellung und umgekehrt eine fernbedienbare Stelleinrichtung (16) vorgesehen ist, daß durch die zur Ausrichtung der Laufrichtung seiner Laufräder (4) zumindest der zweite Schwadkreisel (3 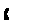 ) um eine Hochachse (19 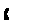 ) relativ zum rückwärtigen Ende des Verbindungsträgers (5) verschwenk- und feststellbar ist.
